# NEUE EUROPÄISCHE PATENTSCHRIFT

(11) **EP 3 604 873 B2**
(45) Veröffentlichungstag und Bekanntmachung des Hinweises auf die Entscheidung über den Einspruch: **09.07.2025**
(45) Hinweis auf die Patenterteilung: 02.06.2021
(21) Anmeldenummer: 18187200.3
(22) Anmeldetag: 03.08.2018
(51) Int. Cl.: F16K 7/12, F04B 43/00, F16J 3/02, G06K 19/07, F04B 43/02

(54) **MEMBRAN MIT LASCHE**
MEMBRANE WITH FLAP
MEMBRANE À LANGUETTE

(43) Veröffentlichungstag der Anmeldung: 05.02.2020
(73) Patentinhaber: SISTO Armaturen S.A., 6468 Echternach (LU)
(72) Erfinder: Hackenberger, Bernd, 6468 Echternach (LU)
(74) Vertreter: Busch, Tobias

(56) Entgegenhaltungen:
- EP-A1- 3 324 084
- EP-B1- 2 558 381
- WO-A1-2010/136198
- DE-A1- 102013 214 304
- DE-A1- 102015 210 210
- DE-A1- 102016 101 782

## Beschreibung

Die Erfindung betrifft Membranen in Ventilen oder Pumpen mit einer Lasche, sowie ein Verfahren zum Recyceln einer Membran.

Die Überwachung oder Diagnose von Membranen in Ventilen und Pumpen ist insbesondere in kritischen Bereichen der sterilen Verfahrenstechnik ein deutlicher Schwerpunkt, dem im Wesentlichen durch vorsorgende Maßnahmen begegnet wird, da fortlaufend gemessene Zustandsgrößen weitestgehend nicht verfügbar sind. Messungen während des laufenden Betriebes sind teilweise nur schwer möglich. Anlagen müssen oft in allen Details steril reinigbar aufgebaut sein, weshalb übliche elektrische Stecker Anordnungen ungünstig sind. Eine Möglichkeit der Erfassung von Zustandsgrößen ist die Integration von Messgeräten in die Membran. Nach Ihrem Einsatz besteht die verbrauchte Membran hauptsächlich aus Elastomer, wobei durch genannte Integration von Messgeräten mindestens ein Elektronikbauteil enthalten ist.

In der DE 10 2013 214 304 A1 wird ein Verfahren und eine Vorrichtung zum Auslesen und Sammeln von Daten aus einer Membran beschrieben.

Die WO2012035291 beschreibt ein Verfahren und eine Vorrichtung zur Diagnose eines Membranventils.

Die DE 10 2015 210 208 A1 beschreibt die Ermittlung von Zustandsgrößen bei Ventilmembranen.

Aufgabe der Erfindung ist es, eine Membran für Ventile und/oder Pumpen zu schaffen, bei der mindestens ein Datenspeicher vorgesehen ist, wobei der Datenspeicher auf unterschiedliche Art in der Membran integriert sein kann. Anforderungen bezüglich der Reinigbarkeit und der Hygiene sollen hoch sein. Weiter soll die Membran einfach und kostengünstig herstellbar sein und einzelne Komponenten sollen nach Gebrauch trennbar und eventuell wiederverwertbar sein.

Diese Aufgabe wird erfindungsgemäß durch eine Vorrichtung mit den Merkmalen des Anspruchs 1 gelöst.

Dies hat den Vorteil, dass eine einfache Nutzung einer Membran mit einem Datenspeicher möglich ist. Je nach Anwendungsgebiet fallen bei den Nutzern deutliche Mengen benötigter Membranen an. Diese sind erfindungsgemäß jeweils aus ihren einzelnen Bestandteilen herzustellen, woraus ein Verbundbauteil aus Elastomer, Verstärkungsmaterial und Datenspeicher entsteht. Nach Gebrauch der Membran kann dieser Datenspeicher eventuell zur Wiederverwendung aus der Membran entnommen werden. Wesentlich wird es hierfür sein, die mechanischen von den elektronischen Komponenten zu trennen. Mechanisch bedeutet in diesem Fall also das reine Membranmaterial, das meist aus einem Elastomer besteht, der eventuell durch eine beliebige Armierung verstärkt ausgeführt ist. Als elektronische Komponenten, hier Datenspeicher genannt, sind auch sämtliche weiteren elektronischen Bauteile zu verstehen. Hierzu zählen einfache Kontaktierungen, Sensoren, Datenspeicher oder komplexere Bauteile, beispielsweise zur Datenanalyse.

In einer Ausgestaltung der Erfindung ist der Lappen von der Membran abreißbar angeordnet. Von Vorteil ist dabei, dass eine einfache, werkzeuglose Trennung von Lappen und Membran möglich ist.

In einer weiteren vorteilhaften Ausgestaltung ist in die Membran ein Verstärkungselement eingearbeitet, wobei das Verstärkungselement nicht im Bereich der Sollbruchstelle vorgesehen ist. Als Verstärkungselement dienen Gewebe oder vollflächige Zwischenlagen. Von Vorteil ist dabei, dass die Trennung von Lappen und Membran vereinfacht ist. Zur weiteren Vereinfachung kann die Membran im Bereich der Sollbruchstelle perforiert sein, was die Trennbarkeit weiter erhöht.

Ebenso kann in einer weiteren erfindungsgemäßen Ausgestaltung der Membran entlang der Sollbruchstelle ein Hilfsmittel zum Schneiden der Membran vorgesehen sein, insbesondere ein Schneidfaden oder eine Schneidfolie. Dies vereinfacht die Trennung zusätzlich. Werkzeuglos wäre dann immer noch als ohne zusätzliches Werkzeug zu verstehen.

Nach der Erfindung ist das zweite Bauteil ein Datenspeicher, wobei dies jede Form von elektrischem oder elektronischem Bauteil umfasst, insbesondere Mittel zur Erfassung, Messung, Verarbeitung, Speicherung und/oder Weitergabe von Status- und/oder Zustandsgrößen, die in oder an der Membran erfassbar sind.

Weiter ist es die Aufgabe der Erfindung eine Membran nach der vorbeschriebenen Art herzustellen, wobei in einem ersten Schritt die Membran regulär in einem Membranventil oder einer Membranpumpe mit einem Datenspeicher benutzt wird, in einem zweiten Schritt verbrauchte Membran aus dem Membranventil oder der Membranpumpe entfernt wird und in einem dritten Schritt der Lappen mit dem Datenspeicher entlang der Sollbruchstelle von der Membran getrennt wird. Von Vorteil ist dabei, dass die einzelnen Komponenten der Membran auf einfache und kostengünstige Weise der Wiederverwertung zugeführt werden können. Insbesondere die Trennung von Elektronik und Elastomer gestaltet sich schwierig, wenn der Verbund derart gestaltet ist, dass die Elektronik im Elastomer eingebettet ist. Häufig lässt sich eine Trennung nur nach thermischer Zerstörung des Elastomers durchführen.

Weitere Vorteile ergeben sich, wenn im vorgestellten erfindungsgemäßen Verfahren Sollbruchstellen im Elastomer derart vorgesehen sind, dass der Datenspeicher werkzeuglos aus dem Elastomer entfernt werden kann.

Weitere Merkmale und Vorteile der Erfindung ergeben sich aus der Beschreibung von Ausführungsbeispielen anhand von Zeichnungen und aus den Zeichnungen selbst.

Dabei zeigt:
Figur 1 eine erfindungsgemäße Membran in einer Schnittansicht und die
Figur 2 eine Schrägsicht auf eine erfindungsgemäße Membran.

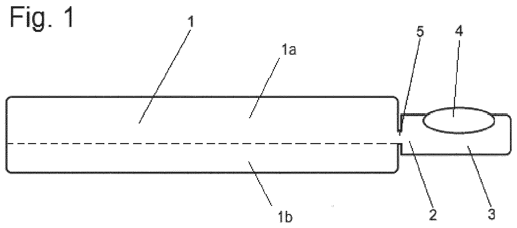

Figur 1 zeigt eine Membran 1, wie sie beispielsweise in einem Membranventil oder einer Membranpumpe zur Anwendung kommt. Die Membran 1 ist aus mehreren Lagen elastomeren Materials 1a, 1b aufgebaut, das bedarfsweise mit einer Verstärkung, beispielsweise einem Gewebe versehen sein kann. Diese Membran verfügt über einen sogenannten Lappen 2, der auch als Lasche oder Fahne bezeichnet wird. Ist die Membran in einem Ventil- oder Pumpengehäuse montiert, so ragt dieser Lappen 2 über die eigentliche Arbeitsfläche der Membran heraus. Die Membran kann zusätzlich über eine spezielle Form verfügen, die durch eine Kammerung für zusätzliche Vorteile sorgt. Diese Ausgestaltung ist in der Figur nicht dargestellt. Aus dem Gehäuse des Ventils oder der Pumpe ragt ein Teil des Lappens 3 in noch gesondert heraus. In diesem Lappen 3 kann ein Datenspeicher 4, insbesondere ein elektronischer Datenspeicher, der auch über Mittel zur Datenerfassung, zur Datenbearbeitung und zur Datenweitergabe verfügen kann.

Die Membran 1 wird in einem Ventil- oder Pumpengehäuse befestigt und durch einen Aktor bewegt, wodurch sich beispielsweise ein Ventil öffnen oder schließen oder die Pumpwirkung erzielen lässt.

Erfindungsgemäß ist der Lappen aus mindestens einer Lage elastomeren Materials ausgestaltet. Die weiteren Lagen der Membran ragen nicht unbedingt in den Bereich des Lappens 3 vor. In dem Lappen 3 befindet sich erfindungsgemäß ein Datenspeicher 4. Dieser Datenspeicher 4 kann beispielsweise als rein passives Element ausgestaltet sein und eine Identitätskennzeichnung der Membran 1 enthalten. Durch eine eindeutige Nummer kann die Historie und Verwendung der Membran beispielsweise aus den Daten einer entsprechenden Datenbank entnommen werden. Er kann aber auch mit einer Datenerfassungsvorrichtung, beispielsweise einem Sensor verbunden sein, für den er die erfassten Daten speichert. Weiter kann bei dem Datenspeicher eine Sende- und Empfangsvorrichtung zur Übertragen von Daten vorgesehen sein.

Der Datenspeicher 4 kann entweder durch direkten Kontakt mit einem Auslesegerät ausgelesen werden oder aber es findet eine kontaktlose Datenauslesung statt, beispielsweise über eine RFID Technik oder vergleichbares. Der Datenspeicher 4 kann über eine eigene Energieversorgung verfügen, oder aber durch das Auslesegerät versorgt werden.

Wesentlich bei der Membran ist die Anordnung einer Sollbruchstelle 5 zwischen dem aus dem Gehäuse herausragenden Lappen 3 und dem im Gehäuse befindlichen Lappen 2. An diesem ist der Lappen 3 werkzeuglos vom übrigen Lappen 2 zu trennen.

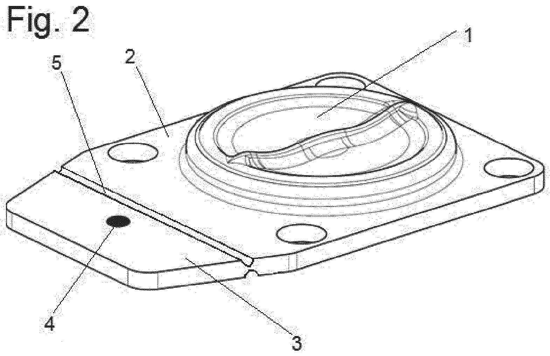

Die Fig. 2 zeigt eine Schrägsicht auf eine erfindungsgemäße Membran, wobei die Details eine konkreten Membranvorrichtung deutlich ausgebildet sind.

### Bezugszeichenliste:

- 1: Membran 1a, 1b Membranlage
- 2: Lappen
- 3: Lappen
- 4: Datenspeicher
- 5: Sollbruchstelle

Patentansprüche

## Patentansprüche

1. Membran (1) eines Membranventils oder einer Membranpumpe, wobei das Membranventil oder die Membranpumpe ein Gehäuse aufweist, umfassend ein erstes Bauteil, bestehend aus einer in dem Gehäuse anordbaren Membran (1), bestehend aus mehreren Membranlagen (1a, 1b) elastomeren Materials und optional einer Verstärkung, wobei ein Teil der Membran (1) aus dem Gehäuse herausragen kann und den sogenannten Lappen (2) bildet, und ein zweites Bauteil, wobei das zweite Bauteil ein Datenspeicher (4) ist und in einem Teil des Lappens (3) angeordnet ist **dadurch gekennzeichnet, dass** zwischen dem Lappen (3) und der übrigen Membran (1) eine Sollbruchstelle (5) vorgesehen ist.

2. Membran (1) nach Anspruch 1, **dadurch gekennzeichnet, dass** der Lappen (3) von der Membran (1) abreißbar angeordnet ist.

3. Membran (1) nach Anspruch 1 oder 2, **dadurch gekennzeichnet, dass** in die Membran (1) ein Verstärkungselement eingearbeitet ist, wobei das Verstärkungselement nicht im Bereich der Sollbruchstelle (5) vorgesehen ist.

4. Membran (1) nach einen der Ansprüche 1 bis 3, **dadurch gekennzeichnet, dass** im Bereich der Sollbruchstelle mindestens eine Membranlage perforiert ist.

5. Membran (1) nach einem der Ansprüche 1 bis 4, **dadurch gekennzeichnet, dass** die Membran entlang der Sollbruchstelle (5) über ein Hilfsmittel zum Schneiden der Membran (1) verfügt, insbesondere einen Schneidfaden oder eine Schneidfolie.

6. Verfahren zur Herstellung und Nutzung einer Membran (1) nach einem der vorherigen Ansprüche, **dadurch gekennzeichnet, dass** in einem ersten Schritt die Membran (1) regulär in einem Membranventil oder einer Membranpumpe mit einem Datenspeicher (4) benutzt wird, in einem zweiten Schritt die verbrauchte Membran (1) aus dem Membranventil oder der Membranpumpe entfernt wird und in einem dritten Schritt der Lappen (2) mit dem Datenspeicher (6) entlang der Sollbruchstelle von der Membran (1) getrennt wird.

7. Verfahren zur Herstellung und Nutzung einer Membran (1) nach Anspruch 7, **dadurch gekennzeichnet, dass** die einzelnen Komponenten der Wiederverwertung zugeführt werden.

## Claims

1. Diaphragm (1) of a diaphragm valve or a diaphragm pump, wherein the diaphragm valve or the diaphragm pump has a housing, comprising a first component consisting of a diaphragm (1) which can be arranged in the housing and consists of multiple diaphragm layers (1a, 1b) of elastomer material and optionally a reinforcement, wherein a part of the diaphragm (1) can project out of the housing and forms what is referred to as the tab (2), and a second component, wherein the second component is a data memory (4) and is arranged in a part of the tab (3), **characterized in that** a predetermined breaking point (5) is provided between the tab (3) and the rest of the diaphragm (1).

2. Diaphragm according to Claim 1, **characterized in that** the tab (3) is arranged in such a way that it can be torn off the diaphragm (1).

3. Diaphragm (1) according to Claim 1 or 2, **characterized in that** a reinforcing element is included in the diaphragm (1), wherein the reinforcing element is not provided in the region of the predetermined breakpoint (5).

4. Diaphragm (1) according to one of Claims 1 to 3, **characterized in that** at least one diaphragm layer is perforated in the region of the predetermined breakpoint.

5. Diaphragm (1) according to one of Claims 1 to 4, **characterized in that** the diaphragm has an auxiliary means for cutting the diaphragm (1), in particular a cutting thread or a cutting film, along the predetermined breakpoint (5).

6. Method for producing and using a diaphragm (1) according to one of the preceding claims, **characterized in that** in a first step the diaphragm (1) is used in a regular fashion in a diaphragm valve or a diaphragm pump with a data memory (4), in a second step the used diaphragm (1) is removed from the diaphragm valve or the diaphragm pump, and in a third step the tab (2) is separated from the diaphragm (1), with the data memory (6), along the predetermined breakpoint.

7. Method for producing and using a diaphragm (1) according to Claim 7, **characterized in that** the individual components are fed for recycling.

## Revendications

1. Membrane (1) d'une soupape à membrane ou d'une pompe à membrane, la soupape à membrane ou la pompe à membrane comprenant un boîtier, comportant un premier composant, constitué par une membrane (1) pouvant être agencée dans le boîtier, constituée par plusieurs couches (1a, 1b) de membrane de matériau élastomère et en option d'un renforcement, une partie de la membrane (1) pouvant dépasser hors du boîtier et formant ladite patte (2), et un deuxième composant, le deuxième composant étant une mémoire de données (4) et étant agencé dans une partie de la patte (3), **caractérisée en ce qu'**un point de rupture (5) est prévu entre la patte (3) et le reste de la membrane (1).

2. Membrane (1) selon la revendication 1, **caractérisée en ce que** la patte (3) est agencée de manière à pouvoir être déchirée de la membrane (1).

3. Membrane (1) selon la revendication 1 ou 2, **caractérisée en ce qu'**un élément de renforcement est incorporé dans la membrane (1), l'élément de renforcement n'étant pas prévu dans la zone de l'emplacement de rupture privilégié (5).

4. Membrane (1) selon l'une quelconque des revendications 1 à 3, **caractérisée en ce qu'**au moins une couche de membrane est perforée dans la zone de l'emplacement de rupture privilégié.

5. Membrane (1) selon l'une quelconque des revendications 1 à 4, **caractérisée en ce que** la membrane dispose d'un auxiliaire pour la coupe de la membrane (1) le long de l'emplacement de rupture privilégié (5), notamment d'un fil de coupe ou d'une feuille de coupe.

6. Procédé de fabrication et d'utilisation d'une membrane (1) selon l'une quelconque des revendications précédentes, **caractérisé en ce que**, dans une première étape, la membrane (1) est utilisée régulièrement dans une soupape à membrane ou une pompe à membrane avec une mémoire de données (4), dans une deuxième étape, la membrane (1) usagée est retirée de la soupape à membrane ou de la pompe à membrane et, dans une troisième étape, la patte (2) munie de la mémoire de données (6) est séparée de la membrane (1) le long de l'emplacement de rupture privilégié.

7. Procédé de fabrication et d'utilisation d'une membrane (1) selon la revendication 7, **caractérisé en ce que** les composants individuels sont acheminés vers la revalorisation.
